# EUROPEAN PATENT APPLICATION

(11) **EP 3 000 325 A1**
(43) Date of publication of application: **30.03.2016**
(21) Application number: 14186111.2
(22) Date of filing: 24.09.2014
(51) Int. Cl.: A22C 25/12

(54) **Fish flipping module**

(71) Applicant: Arenco AB, 391 29 Kalmar (SE)
(72) Inventor: Härd, Urban, 393 54 Kalmar (SE); Hallberg, Tomas, 380 41 Gullaskruv (SE); Karlsson, Kristian, 395 94 Rockneby (SE); Harrysson, Martin, 382 33 Nybro (SE)
(74) Representative: Kransell & Wennborg KB

(57) **Abstract**

The invention relates to a fish flipping module configured to be mounted in a fish processing machine having a conveyor for transporting fish, said fish flipping module comprising a first optical detection device (18) a controller (20) connected to the first optical detection device (20), a first drive (26) and a second drive (32) connected to the controller (20) and a first guide portion (30) and a second guide portion (36) driven by the first drive (26) and the second drive (32), respectively. The first guide portion (30) and the second guide portion (36) are arranged to be installed above the conveyor on opposite sides of it. The controller is configured to individually control the first and second drive so that the first guide portion (30) or the second guide portion (36) can be individually moved between a first position and a second position based on information obtained by the first optical detection device (18).

## Description

### TECHNICAL FIELD

The invention relates to a fish flipping module for flipping fish from a sideways position into a belly-down position. The fish flipping module may be configured to be installed on new and existing fish processing machines.

### BACKGROUND

Automatic fish processing machines are known in the art. Fish processing machines are used to cut off fish heads and fins, to automatically open fish bellies for gutting and filleting and so on. Special tools such as circular saws and filleting devices handle such tasks. In order avoid the waste of precious fish meat these special tools require the correct positioning and orientation of fish prior to performing the task. In the past this required personnel loading fish into the fish processing machine in the correct orientation, which is usually a belly-down position within a channel or the like. This is stressful and monotone work and can thus be harmful for personnel. Additionally there is a risk that personnel is slowing down the entire fish processing machine because they may not be able to keep up with the high frequency of the fish processing machine. Due to the fast frequency of fish processing machines, attempts have been made for the automation of fish orientation within fish processing machines.

Document US 3,498,442 A discloses a device for turning fish that is fed head first to the device from a conveyor belt. A converging channel, which is arranged slightly above the conveyor belt, is used to turn fish from a side position into a belly-down position. Since the converging channel is arranged slightly above the conveyor belt, a slot is formed in between the converging channel and the conveyor belt. When fish, such as herring, trout, salmon, etc. is lying on its side, the belly portion is usually thinner than a back portion, which is generally more round, as seen in a direction perpendicular to a fish's longitudinal direction. The belly portion, no matter if it is oriented left or right is thus entering the slot which slows down a belly-side of the fish whereby the back side is engaging an opposite side of the converging channel. Due to the movement of the conveyor belt, the fish is then turned into a belly-down position so that two rollers having a rotation axis being oriented perpendicular to the transportation plane of the conveyor belt, overtake the fish and transport it away in a belly-down position.

US 3,232,412 discloses another device which may be used to flip fish into a belly-down position, it makes use of the specific shapes of the head of certain fish such as for example herring. US 3,232,412 A teaches that in case a symmetry line of the fish head is not in the middle of the fish but rather inclined in view of the longitudinal axis of the fish, guide planes may be used to flip fish into a upright belly-down position. The guides planes are arranged so that they form a channel at their converging end and just above a conveyor belt and at an angle which is greater than the angle of the fish head. The fish head of a conveyed fish is jammed in the channel in the side position and then one of the guide planes, depending on the belly orientation of the fish, is engaging the back of the fish and turning it into a belly-down position so that the fish can pass through the channel.

Both of the above discussed disclosures have disadvantages. Both devices are limited to a specific type and size of fish. Further, both devices may damage fish because the fish is jammed prior to the turning or flipping.

### SUMMARY

It is an object of the invention to provide a fish flipping module which is efficient and at the same time gentle with fish.

It is another object to provide a fish flipping module that may be installed on new and existing fish processing machines.

Still another object of the invention may be to provide a fish flipping module that can be used for a wide range of fish.

Disclosed herein is a fish flipping module configured to be mounted in a fish processing machine having a conveyor for transporting fish, said fish flipping module comprising a first optical detection device, a controller connected to the first optical detection device, a first drive and a second drive connected to the controller, a first guide portion and a second guide portion, which are driven by the first drive and the second drive, respectively. The first guide portion and the second guide portion are arranged to be installed above the conveyor on opposite sides of it. The controller is configured to individually control the first and second drive so that the first guide portion or the second guide portion can be individually moved between a first position and a second position based on information obtained by the first optical detection device.

The fish flipping module according to the above has a high frequency and may perform more than 100 movements per minute. Additionally the first and second guide portions engage the fish in a gentle way without jamming the fish and thus without damaging the fish.

In an embodiment the first guide portion may comprise a first guide extension and the second guide portion may comprise a second guide extension. The first guide extension and the second guide extension may be configured to engage fish being transported on the conveyor belt, when the first guide portion and the second guide portion, respectively, is in the second position.

The first and second guide extensions may be spoon-shaped or the like so that they can pick up and guide the fish in a gentle way.

In a further embodiment the first guide extension and the second guide extension are integrally formed with the corresponding first guide portion and second guide portion.

This may reduce the risk of weld seams or screws sticking out towards fish and thus reduces the risk of damaging fish.

Advantageously the first guide extension and the second guide extension are connected to the first guide portion and second guide portion, respectively, in an adjustable way.

This may ensure that the fish flipping module can be adapted to various fish types and sizes.

The first guide extension and the second guide extension may be made of rigid material covered or coated with a soft material so that the fish is treated gently. The soft material may for example be rubber, silicone, soft plastic, etc.

In a further embodiment thee fish flipping module may comprise a first frame portion and a second frame portion. The first drive and the first guide portion are mounted on the first frame portion and the second drive and the second guide portion are mounted on the second frame portion.

The first frame portion and the second frame portion may facilitate the handling of the fish flipping module.

A first sub unit may comprise the first frame portion, the first drive and the first guide portion. A second sub unit may comprise the second frame portion, the second drive and the second guide portion.

Having two separate sub units may further enhance the flexibility of the fish flipping module, since it might be easy to adjust the fish flipping module to various sizes and widths of conveyors of fish processing machines.

Advantageously the first frame portion comprises first mounting means and the second frame portion comprises second mounting means. The first and second mounting means are configured to engage complementary mounting means on the fish processing machine.

The first and second mounting means may be snap fit mechanisms, holes for a screwed connection, clamping systems, etc.

The first and second mounting means ease the connection of the fish flipping module to the fish processing machine.

In an embodiment the first guide portion may be pivotably mounted on the first frame portion and the second guide portion may be pivotably mounted on the second frame portion.

The first guide portion and second guide portion may thus be swivelled from the first position into the second position and back.

Advantageously the first optical detection device is mounted either on the first frame portion or the second frame portion so that it can observe at least a part of the conveyor comprising fish, when the fish flipping module is installed on the fish processing machine.

In a preferred embodiment the information obtained by the first optical detection device may comprise the belly orientation of fish being transported on the conveyor.

The first optical detection device may thus be configured to recognize a black or white coloured area, whereby the black area is associated to the back of the fish and the white area is associated to the belly of the fish.

In an embodiment the first drive and the second drive are hydraulic or pneumatic cylinders.

The cylinders may support the movement of the first guide portion and the second guide portion so that the movement is fast and efficient in order to provide a fast frequency that does not slow down the fish processing machine.

In another embodiment of the fish flipping module in their second position, the first guide portion and the second guide portion extend at least partially into a space directly above the conveyor, when the fish flipping module is installed in the fish processing machine.

This may ensure that the fish being conveyed on the conveyor is flipped properly without being just moved or not even touched at all. Preferably the first guide portion and the second guide portion extend at least into a middle region of the space directly above the conveyor, as seen in a cross section cut perpendicular to the conveying direction.

In a further embodiment the fish flipping module may comprise a second optical detection device connected to the controller, said second optical detection device being configured to obtain information regarding the positioning of fish on the conveyor. The second optical detection device may be mounted on one of the first frame portion or second frame portion, so that it can observe at least a part of the conveyor comprising fish when the fish flipping module is installed in the fish processing machine.

This may further ensure that no fish is destroyed when flipped. Additionally the second optical detection device may be configured to observe if a wrong type of fish or a bad positioned fish is on the conveyor, so that this fish may be sorted out, for example by another device. It may in the future further be envisaged that the second optical detection device can stop the conveyor when an incorrectly positioned fish is observed to avoid a jamming of fish around the fish flipping module.

The first and second optical detection devices may be cameras or photocells.

The first guide portion and the second guide portion may be shaped as guiding plates. Optionally such guiding plates may each comprise an endless conveyor that is vertically oriented, to avoid a high friction when the fish is touched and flipped.

It is further envisioned herein to cover a fish processing machine comprising a fish flipping module according to any of the above described embodiments.

Generally, all terms used in the claims are to be interpreted according to their ordinary meaning in the technical field, unless explicitly defined otherwise herein. All references to "a/an/the element, extension, portion, apparatus, component, means, step, etc." are to be interpreted openly as referring to at least one instance of the element, extension, portion, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 schematically illustrates a perspective view of the fish flipping module according to an embodiment of the invention;
Fig 2 schematically illustrates a top down view onto the fish flipping module according to figure 1 installed on a fish processing machine;
Fig 3 schematically illustrates a side view of the fish flipping module according to figure 1; and
Fig 4 schematically illustrates another side view of the fish flipping module from a different angle as figure 3, installed on a fish processing machine.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

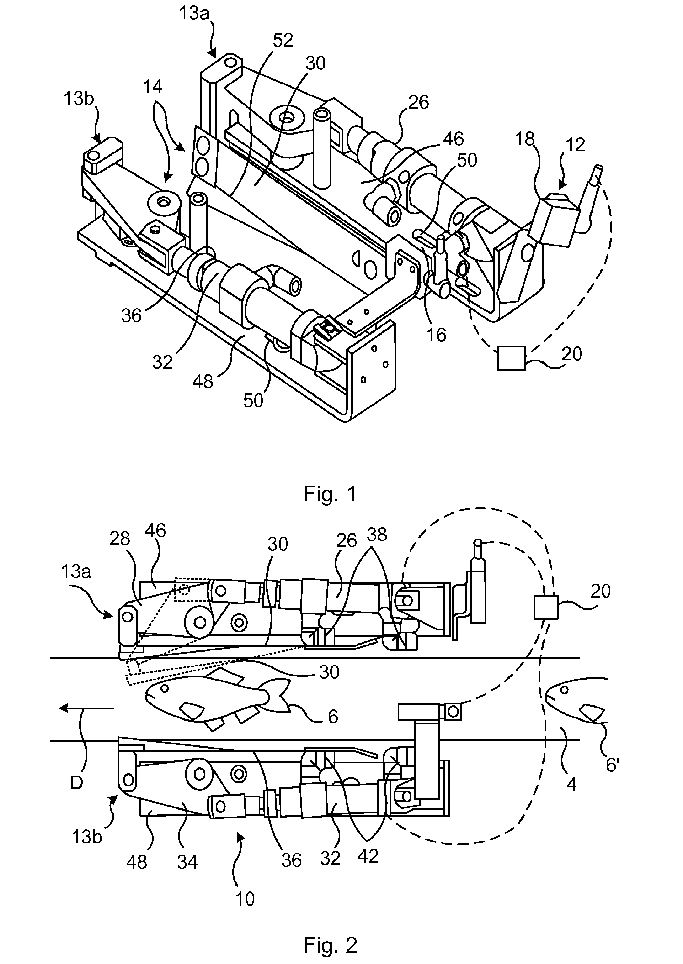

Figure 1 illustrates schematically a fish flipping module 10 comprising a control unit 12 and a fish flipping unit 14. In figure 1 the fish flipping module 10 is shown as a separate module not installed on a fish processing machine 2. The fish flipping module 10 is configured to be used and installed as an independent unit on existing and new fish processing machines 2. The fish flipping module 10 comprises a first sub unit 13a and a second sub unit 13b. In figure 1, the sub units 13a, 13b are not physically or mechanically connected but only via communication channels of the control unit 12, as will be described later herein. Having a first sub unit 13a and a second sub unit 13b may ease the adjustment of the fish flipping module 10 onto different types of fish processing machines, in particular onto fish processing machines 2 having different conveyor sizes with different widths as measured in a plane of transportation and perpendicular to the conveying direction D (c.f. figure 2).

Although the two sub units 13a, 13a are illustrated in figure 1 as not being mechanically connected they may be mechanically connected, for example to avoid that the fish flipping module 10 is installed on the wrong fish processing machine 2. This may for example be useful to avoid that the fish flipping module 10 is installed on a fish processing machine 2 that is used to process flat fish or the like.

Referring to figure 1, the control unit 12 comprises a first optical detection device 18, a second optical detection device 16 and a controller 20. The first optical detection device 18 and the second optical detection device 16 are both connected to the controller 20 for communication. The connections are schematically illustrated in figure 1. The controller 20 may be configured to be integrated in the control system (not shown) of the fish processing machine 2. The first optical detection device 18 and the second optical detection device 16 may be cameras, photocells or the like.

Still referring to figure 1, the first sub unit 13a of the fish flipping unit 14 comprises a first drive 26 and a first guide portion 30 and the second sub unit 13b comprises a second drive 32 and a second guide portion 36. The first guide portion 30 is connected to the first drive 26 and the second guide portion 36 is connected to the second drive 32. The first sub unit 13a further comprises a first frame portion 46 and the second sub unit 13b a second frame portion 48. The first frame portion 46 and the second frame portion 48 each comprise mounting means 50, which may engage complementary mounting means (not shown) on the fish processing machine 2.

The mounting means 50 and the complementary mounting means may be a snap fit mechanism, a clamping mechanism or as illustrated a screw connection with holes.

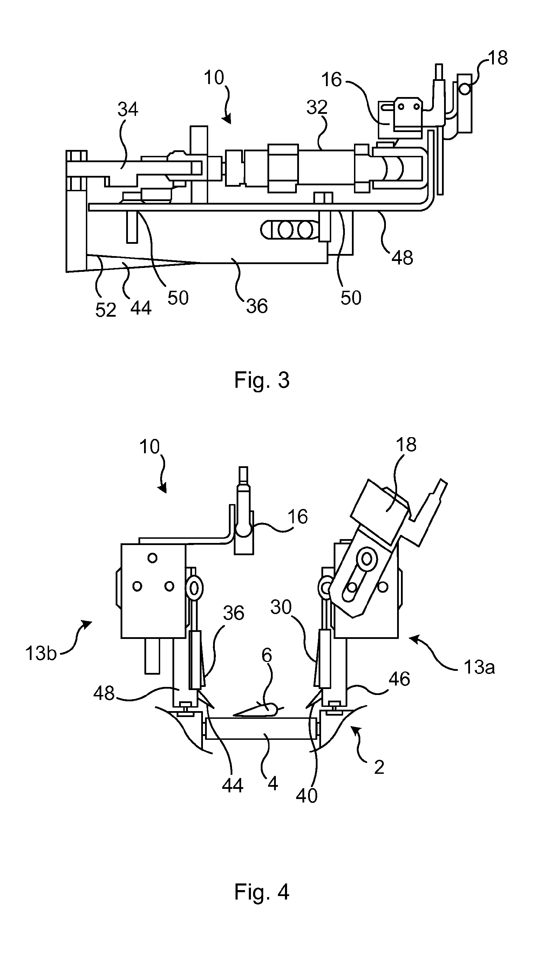

Figure 1 schematically illustrates the controller 20, which is configured to control the fish flipping unit 14, which will be described in detail later herein, and it may even be configured to control the conveyor 4 (c.f. figures 2 and 4) of the fish processing machine 2 upon receiving information and data from the first optical detection device 18 and the second optical detection device 16, respectively.

Turning now to figure 2, the first optical detection device 18 is configured to recognize the orientation of the belly of a fish 6 conveyed on the conveyor 4 of the fish processing machine 2 (c.f. figure 2), as the fish is conveyed in a head forward position along the conveying direction D. The first optical detection device 16 recognizes the belly orientation of the fish 6 by identifying bright and dark zones on the fish 6 surface. The bright or white zone is associated with the belly and the dark zone with the back. This information is fed to the controller 20, which then decides which of the first guide portion 30 and second guide portion 36, thus which of the first drive 26 and the second drive 32, needs to be activated in order to flip the fish into a belly-down position. As illustrated in figure 2, the controller 20 is connected to the first drive 26 and the second drive 32, in order to active one of the first drive 26 or second drive 32, in case it is needed. In figure 2 the first guide portion 30 is moved from the first position (solid lines) into the second position (dashed lines) since the first optical detection means recognized that the belly of the fish is oriented towards the second sub unit 13b. The second guide portion 36 rests in the second position since it is not needed to move it in order to flip the fish 6. When the fish 6 is now further conveyed towards the first guide portion 30, which is now in the second position, the first guide portion 30 engages the fish head and finally more or less the fish 6 as the fish 6 moves along the conveying direction D and gently flips it into a belly-down position.

In the second position the first guide portion 30 and the second guide portion 36, respectively, is extending, at least partially, across a space directly above the conveyor 4, when the fish flipping module 10 is installed in a fish processing machine 2. Preferably the first and second guide portions 30, 36, respectively, are extending into middle region of the conveyor 4 but in the space above the conveyor 4, as seen in a plane perpendicular to the conveying direction D.

In the first position the first guide portion 30 and the second guide portion 36, respectively, are retracted and not extending into the space above the conveyor 4, when the fish flipping module 10 is installed in a fish processing machine 2.

Once the fish 6 is in a belly-down position it may be guided further by a channel (not shown) receiving the fish 6, said channel being arranged immediately after the fish flipping unit 10. Additionally or Alternatively vertical rolls (not shown), which guide the fish 6 further in the belly-down position, may be used to take over the fish 6 after the flipping.

When the fish 6 has passed the fish flipping unit 10 the controller 20 is configured to wait and not activate any of the first guide portion 30 or second guide portion 36 until further information from the first optical detection device 18 is received.

This has the advantage that no time is wasted for activating the first drive 26 and the second drive 32 in case the subsequent fish 6' is oriented in the same way as the precedent fish 6, as shown in figure 2.

On the other hand, if the subsequent fish 6' is oriented in the other way, the belly thus pointing towards the first sub unit 13a, the first optical device 18 will feed according data to the controller 20 which then controls the first drive 26 and the second drive 32, respectively so that the first guide portion 30 is moved from the second position back into the first position, by the first drive 26, and the second guide portion 36 is moved from the first position into the second position, by the second drive 32.

The first drive 26 and the second drive 32 may be hydraulic or pneumatic cylinders, whereby pneumatic cylinders are illustrated in the figures. The first and second drives 26, 32 comprise each two nipples 38, 42, as best illustrated in figure 2. One of the two nipples 38, 42 is thereby for extending the first cylinder and second cylinder, respectively, and the other is for retracting the first cylinder and second cylinder, respectively. The first and second drives 26, 32 may each be connected to a fluid valve (not shown) via the nipples 38, 42.

The first drive 26 and the first guide portion 30 are pivotably mounted on the first frame portion 46. The second drive 32 and the second frame portion 48 are pivtoably mounted on the second frame portion 48. In between the first drive 26, in the form of a cylinder, and the first guide portion 30 a first lever element 28 may be arranged and in between the second drive 32, in the form of a cylinder, and the second guide portion 36 a second lever element 34 may be arranged. The first lever element 28 and the second lever element 34 may be pivotably arranged on the first frame portion 46 and the second frame portion 48, respectively.

The first lever element 28 and the second lever element 34 may be pillar loops or the like.

The first guide portion 30 and the second guide portion 36 are configured to extend more or lesser over the entire length, as measured in the conveying direction D (c.f. figure 2), of the first frame portion 46 and the second frame portion 48, respectively. It is however envisaged herein to cover first and second guide portions with other lengths, as long as they fulfil the purpose of gently flipping fish 6, when in the second position.

The first guide portion 30 may comprise a first guide extension 40 and the second guide portion 36 may comprise a second guide extension 44 as best illustrated in figures 2 and 3. The first and second guide extensions 40, 44 may be shaped spoon-like, thus slightly rounded and they may be arranged at the edge of the first and second guide portions 30, 36, respectively, closest to the conveyor 4. Alternatively, the first guide extension 40 and the second guide extension 44 may have a triangular, plate-like shape whereby one side of the triangular shape is connected to the first guide portion 30 and the second guide portion 36, respectively.

The first guide extension 40 and second guide extension 44 are arranged on the first guide portion 30 and the second guide portion 36, respectively, at their lower edge 52 (c.f. figures 1 and 2).

The purpose of the first guide portion 40 and the second guide portion 44 is to reduce the angle from the plane of the conveyor 4 to the plane of the first guide portion 30 and the second guide portion 36, respectively to more than rectangular. The first guide extension 40 and the second guide extension 44 thus ensure that the fish 6 is picked up and flipped more gently versus when the angle between the two planes of the conveyor 4 and the first and second guide portions 30, 36 is rectangular.

In order to further provide a gentler pick up of the fish 6, the first guide extension 40 and the second guide extension 44 may be made of a rigid material and coated with a soft material.

The first guide portion 30 and the first guide extension 40 may be integrally formed and the second guide portion 36 and the second guide extension 44 may be integrally formed.

Figure 4 illustrates how the fish flipping module 10 is installed in a fish processing machine 2. Since the fish flipping module 10 is an independent module the installation is quick and easy. It may be envisaged to provide mounting means 50, which enable the adjustment of the height of the fish flipping module 10 above the conveyor 4 of the fish processing machine 2. This may for example be achieved by using washers in between the first and second frame portions 46, 48 and the fish processing machine 2.

The invention has now been described according to the embodiments shown in the figures. It is however envisaged to cover alternative solutions; - for example could the pneumatic cylinders be replaced with electric drives that are coupled directly to the first guide potion 30 and second guide portion 36.

Further the first and second lever elements 28, 34 may comprise various connecting points, for example in the form of holes, so that the second position of the first guide portion 30 and the second guide portion 36, respectively, may be adjusted depending on the fish type or size. Herring and trout may for example require a different second position of the first and second guide extension.

Further the first guide extension 40 and the second guide extension 44 have been described as being fixedly connected to the first guide portion 30 and the second guide portion 36, respectively. It may however be envisaged to provide first and second guide extensions 44, which are adjustably connected to the first and second guide portions 30, 36, respectively. Such adjustable first and second guide extensions 40, 44 may be advantageous when the fish flipping module 10 is used with different types of fish.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A fish flipping module configured to be mounted in a fish processing machine having a conveyor for transporting fish, said fish flipping module comprising:
- a first optical detection device (18);
- a controller (20) connected to the first optical detection device (20);
- a first drive (26) and a second drive (32) connected to the controller (20); and
- a first guide portion (30) and a second guide portion (36) driven by the first drive (26) and the second drive (32), respectively;
wherein the first guide portion (30) and the second guide portion (36) are arranged to be installed above the conveyor on opposite sides of it and wherein the controller is configured to individually control the first and second drive so that the first guide portion (30) or the second guide portion (36) can be individually moved between a first position and a second position based on information obtained by the first optical detection device (18).

2. The fish flipping module according to claim 1, wherein the first guide portion (30) comprises a first guide extension (40) and wherein the second guide portion (36) comprises a second guide extension (44), the first guide extension (40) and the second guide extension (44) being configured to engage fish being transported on the conveyor belt when the first guide portion and the second guide portion, respectively, is in the second position.

3. The fish flipping module according to the previous claim, wherein the first guide extension (40) and the second guide extension (44) are integrally formed with the corresponding first guide portion (30) and second guide portion (36), respectively.

4. The fish flipping module according to claim 2, wherein the first guide extension (40) and the second guide extension (44) are connected to the first guide portion (30) and second guide portion (36), respectively, in an adjustable way.

5. The fish flipping module according to any of the previous claims, comprising a first frame portion (22) and a second frame portion (24), wherein the first drive (26) and the first guide portion (30) are mounted on the first frame portion and wherein the second drive (32) and the second guide portion (36) are mounted on the second frame portion.

6. The fish flipping module according to the previous claim, wherein the first frame portion (22) comprises first mounting means (46) and wherein the second frame portion (24) comprises second mounting means (48), said first and second mounting means being configured to engage complementary mounting means on the fish processing machine.

7. The fish flipping module according to claim 5 or 6, wherein the first guide portion (30) is pivotably mounted on the first frame portion (22) and wherein the second guide portion is pivotably mounted on the second frame portion (24).

8. The fish flipping module according to any of claims 5 to 7, wherein the first optical detection device (18) is mounted either on the first frame portion (22) or the second frame portion (24) so that it can observe at least a part of the conveyor comprising fish, when the fish flipping module is installed on the fish processing machine.

9. The fish flipping module according to any of the previous claims, wherein the information obtained by the first optical detection device (18) comprises the belly orientation of fish being transported on the conveyor.

10. The fish flipping module according to any of the previous claims, wherein the first drive (26) and the second drive (32) are hydraulic or pneumatic cylinders.

11. The fish flipping module according to any of the previous claims, wherein in their second position, the first guide portion (30) and the second guide portion (36) extend at least partially into a space directly above the conveyor, when the fish flipping module is installed in the fish processing machine.

12. The fish flipping module according to any of the previous claims, comprising a second optical detection device (18) connected to the controller (20), said second optical detection device being configured to obtain information regarding the positioning and/or type of fish on the conveyor, said second optical detection device (18) being mounted on one of the first frame portion (22) or second frame portion (24), so that it can observe at least a part of the conveyor comprising fish when the fish flipping module is installed in the fish processing machine.

13. Fish processing machine comprising a fish flipping module according to any of claims 1 to 12.
